(19) Europäisches Patentamt
European Patent Office
Office européen des brevets

(11) **EP 3 332 988 B1**

(12) **EUROPEAN PATENT SPECIFICATION**

(45) Date of publication and mention of the grant of the patent:
**19.06.2019 Bulletin 2019/25**

(51) Int Cl.:
***B60C 1/00*** *(2006.01)*

(21) Application number: **17205846.3**

(22) Date of filing: **07.12.2017**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2016 JP 2016238543**

(43) Date of publication of application:
**13.06.2018 Bulletin 2018/24**

(73) Proprietor: **Sumitomo Rubber Industries, Ltd.**
**Kobe-shi, Hyogo 651-0072 (JP)**

(72) Inventors:
 • **YAMADA, Ayuko**
   **Kobe-shi, Hyogo 651-0072 (JP)**
 • **KATO, Fumiya**
   **Kobe-shi, Hyogo 651-0072 (JP)**
 • **SUGIMOTO, Mutsuki**
   **Kobe-shi, Hyogo 651-0072 (JP)**
 • **UESAKA, Kenichi**
   **Kobe-shi, Hyogo 651-0072 (JP)**

(74) Representative: **TBK**
**Bavariaring 4-6**
**80336 München (DE)**

(56) References cited:
**EP-A1- 2 944 669        EP-A2- 0 807 603**
**US-A1- 2002 132 904**

**Description**

BACKGROUND OF THE INVENTION

Field of the Invention

The present invention relates to a pneumatic tire.

Description of the Background Art

Tires are required to have low fuel consumption performance, wet grip performance, and wear resistance. In addition to these performance characteristics, reduction in the temperature dependency of rolling resistance is also desired in order to inhibit fluctuations of low fuel consumption performance depending on the season.

In order to reduce the temperature dependency of rolling resistance, for example, in Japanese Laid-Open Patent Publication No. 2003-12863, a master batch of styrene butadiene rubber and carbon black and a master batch of natural rubber and carbon black are mixed for achieving reduction in the temperature dependency of rolling resistance. However, there is still room for improvement therein.

SUMMARY OF THE INVENTION

An object of the present invention is to provide a pneumatic tire that solves the above problem and that has improved wear resistance and has reduced temperature dependency of rolling resistance while low fuel consumption performance and wet grip performance are kept favorable or improved.

The present invention is directed to a pneumatic tire having a tread produced by using a rubber composition containing 5 to 25 parts by mass of aluminum hydroxide per 100 parts by mass of a rubber component containing: not less than 50% by mass of a styrene butadiene rubber A having a styrene content of 30 to 45% by mass, a vinyl content of 40 to 55% by mass, and a weight-average molecular weight of 600 thousand to 850 thousand; and 15 to 45% by mass of a styrene butadiene rubber B having a styrene content of 5 to 25% by mass, a vinyl content of 30 to 55% by mass, and a weight-average molecular weight of 100 thousand to 350 thousand.

The rubber composition preferably contains 1 to 10 parts by mass of an aromatic resin and 10 to 30 parts by mass of a softener component per 100 parts by mass of the rubber component.

The rubber composition preferably contains not less than 60 parts by mass of silica per 100 parts by mass of the rubber component.

The rubber composition preferably contains 1 to 30 parts by mass of carbon black per 100 parts by mass of the rubber component.

The rubber composition preferably contains butadiene rubber.

The pneumatic tire according to the present invention has a tread produced by using a rubber composition containing 5 to 25 parts by mass of aluminum hydroxide per 100 parts by mass of a rubber component containing: not less than 50% by mass of a styrene butadiene rubber A having a styrene content of 30 to 45% by mass, a vinyl content of 40 to 55% by mass, and a weight-average molecular weight of 600 thousand to 850 thousand; and 15 to 45% by mass of a styrene butadiene rubber B having a styrene content of 5 to 25% by mass, a vinyl content of 30 to 55% by mass, and a weight-average molecular weight of 100 thousand to 350 thousand. Thus, it is possible to provide a pneumatic tire that has improved wear resistance and has reduced temperature dependency of rolling resistance while low fuel consumption performance and wet grip performance are kept favorable or improved.

DESCRIPTION OF THE PREFERRED EMBODIMENTS

A pneumatic tire according to the present invention has a tread produced by using a rubber composition that contains 5 to 25 parts by mass of aluminum hydroxide per 100 parts by mass of a rubber component containing: not less than 50% by mass of a styrene butadiene rubber A having a styrene content of 30 to 45% by mass, a vinyl content of 40 to 55% by mass, and a weight-average molecular weight of 600 thousand to 850 thousand; and 15 to 45% by mass of a styrene butadiene rubber B having a styrene content of 5 to 25% by mass, a vinyl content of 30 to 55% by mass, and a weight-average molecular weight of 100 thousand to 350 thousand.

The rubber composition according to the present invention contains: the rubber component containing not less than 50% by mass of the styrene butadiene rubber A (SBR A) having a high styrene content and a high molecular weight and 15 to 45% by mass of the styrene butadiene rubber B (SBR B) having a low styrene content and a low molecular weight; and a specific amount of the aluminum hydroxide.

The reasons why the above-described advantageous effects are achieved by the tread produced by using the rubber composition according to the present invention are inferred as follows.

The rubber composition according to the present invention contains, as the rubber component, not less than 50% by mass of the styrene butadiene rubber A (SBR A) having a high styrene content and a high molecular weight and 15 to 45% by mass of the styrene butadiene rubber B (SBR B) having a low styrene content and a low molecular weight. Accordingly, a sea-island structure in which the SBR A, the amount of which is large, forms a sea phase and the SBR B, the amount of which is small, forms an island phase is formed, and major part of the blended aluminum hydroxide is dispersed in the sea phase. As a result, while low fuel consumption performance and wet grip performance are kept favorable or improved, wear resistance can be improved, and the temperature dependency of rolling resistance can also be reduced.

In the present invention, as the rubber component, the styrene butadiene rubber A (SBR A) having a styrene content of 30 to 45% by mass, a vinyl content of 40 to 55% by mass, and a weight-average molecular weight of 600 thousand to 850 thousand, and the styrene butadiene rubber B (SBR B) having a styrene content of 5 to 25% by mass, a vinyl content of 30 to 55% by mass, and a weight-average molecular weight of 100 thousand to 350 thousand, are used.

SBRs that can be used as the SBR A and the SBR B are not particularly limited, and, for example, emulsion-polymerized styrene butadiene rubber (E-SBR) and solution-polymerized styrene butadiene rubber (S-SBR) can be used.

The styrene content of the SBR A is not less than 30% by mass and preferably not less than 33% by mass. When the styrene content is not less than 30% by mass, the above-described sea-island structure can be suitably formed, and thus the advantageous effects of the present invention are sufficiently achieved. The above styrene content is not greater than 45% by mass, preferably not greater than 40% by mass, and more preferably not greater than 38% by mass. When the styrene content is not greater than 45% by mass, heat generation is reduced, and thus favorable low fuel consumption performance is achieved.

In the present specification, the styrene content is calculated by $H^1$-NMR measurement.

The vinyl content of the SBR A is not less than 40% by mass and preferably not less than 45% by mass. When the vinyl content is not less than 40% by mass, favorable wet grip performance is achieved. The above vinyl content is not greater than 55% by mass and preferably not greater than 53% by mass. When the vinyl content is not greater than 55% by mass, favorable wear resistance is achieved.

In the present specification, the vinyl content (1,2-bond butadiene unit content) can be measured by infrared absorption spectrometry.

The weight-average molecular weight (Mw) of the SBR A is not less than 600 thousand and preferably not less than 650 thousand. When the weight-average molecular weight is not less than 600 thousand, favorable wear resistance is achieved. The above Mw is not greater than 850 thousand, preferably not greater than 800 thousand, and more preferably not greater than 750 thousand. When the Mw is not greater than 850 thousand, favorable processability and favorable low fuel consumption performance are achieved.

In the present specification, the weight-average molecular weight (Mw) can be obtained by polystyrene standard conversion based on a value measured by gel permeation chromatography (GPC) (GPC-8000 series manufactured by Tosoh Corporation, detector: differential refractometer, column: TSKGEL SUPERMALTPORE HZ-M manufactured by Tosoh Corporation).

The styrene content of the SBR B is not less than 5% by mass and preferably not less than 8% by mass. When the styrene content is not less than 5% by mass, favorable wet grip performance is achieved. The above styrene content is not greater than 25% by mass, preferably not greater than 20% by mass, and more preferably not greater than 15% by mass. When the styrene content is not greater than 25% by mass, the above-described sea-island structure can be suitably formed, and thus the advantageous effects of the present invention are sufficiently achieved.

The vinyl content of the SBR B is not less than 30% by mass and preferably not less than 35% by mass. When the vinyl content is not less than 30% by mass, favorable wet grip performance is achieved. The above vinyl content is not greater than 55% by mass and preferably not greater than 50% by mass. When the vinyl content is not greater than 55% by mass, favorable wear resistance is achieved.

The weight-average molecular weight (Mw) of the SBR B is not less than 100 thousand and preferably not less than 150 thousand. When the weight-average molecular weight is not less than 100 thousand, favorable wear resistance is achieved. The above Mw is not greater than 350 thousand, preferably not greater than 300 thousand, and more preferably not greater than 250 thousand. When the Mw is not greater than 350 thousand, favorable processability and favorable low fuel consumption performance are achieved.

For the reason that the above-described sea-island structure can be suitably formed and thus the advantageous effects of the present invention are more suitably achieved, the difference in styrene content between the SBR A and the SBR B is preferably not less than 5% by mass, more preferably not less than 10% by mass, further preferably not less than 15% by mass, and particularly preferably not less than 20% by mass. On the other hand, the difference in styrene content is preferably not greater than 40% by mass, more preferably not greater than 35% by mass, and further preferably not greater than 30% by mass, since the compatibility between the SBR A and the SBR B improves and thus favorable wear resistance and favorable low fuel consumption performance tend to be achieved.

In order to more suitably disperse the aluminum hydroxide in the sea phase formed by the SBR A, the SBR A preferably has a functional group that interacts with the hydroxyl groups of the aluminum hydroxide. Meanwhile, the SBR B is preferably an unmodified SBR that does not have the above functional group, or an SBR that has a styrene content lower than that of the SBR A by 10% by mass or greater (may have the above functional group).

Examples of the functional group that interacts with the hydroxyl group include an amino group, an amide group, an alkoxysilyl group, an isocyanate group, an imino group, an imidazole group, a urea group, an ether group, a carbonyl group, a carboxyl group, a hydroxyl group, a nitrile group, a pyridyl group, an alkoxy group, and a pyrrolidinyl group. These functional groups may have substituents. Among these functional groups, for the reason that the advantageous effects of the present invention are more suitably achieved, a carboxyl group, an amide group, an amino group, an alkoxy group, and an alkoxysilyl group are preferable.

Examples of the modified SBR A include an end-modified SBR obtained by modifying at least one end of SBR with a compound having the above functional group (a modifier), a main chain-modified SBR having the above functional group in the main chain, and a main chain/end-modified SBR having the above functional group in the main chain and at an end (for example, a main chain/end-modified SBR that has the above functional group in the main chain and in which at least one end is modified with the above modifier).

The amount of the SBR A in 100% by mass of the rubber component is not less than 50% by mass and preferably not less than 55% by mass. When the amount of the SBR A is not less than 50% by mass, the above-described sea-island structure can be suitably formed, and thus the advantageous effects of the present invention are sufficiently achieved. In addition, the above amount of the SBR A is preferably not greater than 75% by mass, more preferably not greater than 70% by mass, and further preferably not greater than 60% by mass. When the amount of the SBR A is not greater than 75% by mass, favorable low fuel consumption performance, favorable wear resistance, and the effect of reducing the temperature dependency of rolling resistance tend to be achieved.

The amount of the SBR B in 100% by mass of the rubber component is not less than 15% by mass, preferably not less than 20% by mass, and more preferably not less than 25% by mass. When the amount of the SBR B is not less than 15% by mass, the above-described sea-island structure can be suitably formed, and thus the advantageous effects of the present invention are sufficiently achieved. In particular, favorable low fuel consumption performance, favorable wear resistance, and the effect of reducing the temperature dependency of rolling resistance tend to be achieved. In addition, the amount of the SBR B is not greater than 45% by mass, preferably not greater than 40% by mass, and further preferably not greater than 35% by mass. When the amount of the SBR B is not greater than 45% by mass, favorable wet grip performance tends to be achieved.

The total amount of the SBR A and the SBR B in 100% by mass of the rubber component is preferably not less than 70% by mass and more preferably not less than 80% by mass, for the reason that the advantageous effects of the present invention are more suitably achieved. The total amount may be 100% by mass, but is preferably not greater than 95% by mass and more preferably not greater than 90% by mass.

As the above SBR A or SBR B, for example, a solution-polymerized SBR manufactured by Sumitomo Chemical Co., Ltd., JSR Corporation, Asahi Kasei Corporation, or Zeon Corporation can be used.

Examples of a rubber component that can be used in the present invention in addition to the SBR A and the SBR B include diene-based rubbers such as natural rubber (NR), isoprene rubber (IR), butadiene rubber (BR), acrylonitrile-butadiene rubber (NBR), chloroprene rubber (CR), isobutylene-isoprene-rubber (IIR), styrene-isoprene-butadiene copolymerization rubber (SIBR). In addition, SBRs other than the SBR A and the SBR B may be used. These diene-based rubbers may be used singly, or two or more of these diene-based rubbers may be used in combination. Among these diene-based rubbers, BR is preferable, since BR can improve wear resistance more and reduce the temperature dependency of rolling resistance more. By blending BR, a sea-island structure in which the SBR A forms a sea phase and the SBR B and the BR form an island phase is formed, and thus the advantageous effects of the present invention are more suitably achieved.

The BR is not particularly limited, and, for example, a BR having a high cis content such as BR 1220 manufactured by Zeon Corporation and BR 130B and BR 150B manufactured by Ube Industries, Ltd., and a BR containing syndiotactic polybutadiene crystal such as VCR412 and VCR617 manufactured by Ube Industries, Ltd. can be used. Among these BRs, a BR having a cis content of not less than 95% by mass is preferable, for the reason that the wear resistance improves.

The amount of the BR in 100% by mass of the rubber component is preferably not less than 5% by mass and more preferably not less than 10% by mass. When the amount of the BR is not less than 5% by mass, a favorable effect of improving the wear resistance and a favorable effect of reducing the temperature dependency of rolling resistance tend to be achieved. In addition, the amount of the BR is preferably not greater than 30% by mass, more preferably not greater than 25% by mass, and further preferably not greater than 20% by mass. When the amount of the BR is not greater than 30% by mass, the amounts of the SBR A and the SBR B are not significantly decreased and are sufficiently ensured, and thus the advantageous effects of the present invention tend to be sufficiently achieved.

The rubber composition according to the present invention contains the aluminum hydroxide. The aluminum hydroxide is not particularly limited, and general one in the tire industry can be used.

The average primary particle diameter of the aluminum hydroxide is preferably not less than 0.5 μm and more preferably not less than 0.8 μm. When the average primary particle diameter of the aluminum hydroxide is not less than 0.5 μm, dispersion of the aluminum hydroxide becomes more favorable, and thus favorable wear resistance tends to be achieved. In addition, the average primary particle diameter of the aluminum hydroxide is preferably not greater than 10 μm and more preferably not greater than 5 μm. When the average primary particle diameter of the aluminum hydroxide is not greater than 10 μm, the aluminum hydroxide is unlikely to become a rupture nucleus, and thus favorable wear resistance tends to be achieved.

In the present invention, the average primary particle diameter of a metal hydroxide is a number-average particle diameter and is measured with a transmission electron microscope.

The amount of the aluminum hydroxide per 100 parts by mass of the rubber component is not less than 5 parts by mass and preferably not less than 8 parts by mass. When the amount of the aluminum hydroxide is not less than 5 parts by mass, the advantageous effects of the present invention are sufficiently achieved. In addition, the amount of the aluminum hydroxide is not greater than 25 parts by mass, preferably not greater than 20 parts by mass, and more preferably not greater than 18 parts by mass. When the amount of the aluminum hydroxide is not greater than 25 parts by mass, favorable wear resistance tends to be achieved.

The rubber composition according to the present invention preferably contains silica. By containing the silica as a filler, the advantageous effects of the present invention are more suitably achieved. As the reason for this, in the sea-island structure in which the SBR A forms the sea phase and the SBR B forms the island phase, major part of the aluminum hydroxide is dispersed in the sea phase, and major part of the silica is also dispersed in the sea phase, so that the advantageous effects of the present invention are inferred to be more suitably achieved.

The silica is not particularly limited, and examples of the silica include dry-process silica (silicic anhydride) and wet-process silica (hydrous silicic acid), and wet-process silica is preferable for the reason that it has a higher silanol group content.

The nitrogen adsorption specific surface area ($N_2SA$) of the silica is preferably not less than 50 m$^2$/g and more preferably not less than 100 m$^2$/g. When the $N_2SA$ of the silica is not less than 50 m$^2$/g, favorable wear resistance tends to be achieved. In addition, the $N_2SA$ of the silica is preferably not greater than 300 m$^2$/g, more preferably not greater than 250 m$^2$/g, and further preferably not greater than 200 m$^2$/g. When the $N_2SA$ of the silica is not greater than 300 m$^2$/g, favorable kneading processability and favorable low fuel consumption performance tend to be achieved.

The nitrogen adsorption specific surface area of the silica is a value measured by the BET method according to ASTM D3037-81.

For the reason that the advantageous effects of the present invention are more suitably achieved, two types of silica having different nitrogen adsorption specific surface areas (silica (1) and (2)) are preferably blended.

The $N_2SA$ of the silica (1) is not greater than 130 m$^2$/g, preferably not greater than 125 m$^2$/g, and more preferably not greater than 120 m$^2$/g. When the $N_2SA$ of the silica (1) is not greater than 130 m$^2$/g, the effect achieved by mixing with the silica (2) is great. In addition, the $N_2SA$ of the silica (1) is preferably not less than 20 m$^2$/g, more preferably not less than 30 m$^2$/g, and further preferably not less than 80 m$^2$/g. When the $N_2SA$ of the silica (1) is not less than 20 m$^2$/g, favorable wear resistance tends to be achieved.

Examples of silica having a nitrogen adsorption specific surface area ($N_2SA$) of not greater than 130 m$^2$/g include ULTRASIL 360 ($N_2SA$: 50 m$^2$/g) manufactured by Evonik Degussa GmbH, ZEOSIL115GR ($N_2SA$: 115 m$^2$/g) manufactured by Rhodia Chimie, and ZEOSIL 1115MP ($N_2SA$: 115 m$^2$/g) manufactured by Rhodia Chimie.

The $N_2SA$ of the silica (2) is not less than 150 m$^2$/g, preferably not less than 160 m$^2$/g, and more preferably not less than 170 m$^2$/g. When the $N_2SA$ of the silica (2) is not less than 150 m$^2$/g, the effect achieved by mixing with the silica (1) is great. In addition, the $N_2SA$ of the silica (2) is preferably not greater than 300 m$^2$/g, more preferably not greater than 240 m$^2$/g, and further preferably not greater than 200 m$^2$/g. When the $N_2SA$ of the silica (2) is not greater than 300 m$^2$/g, favorable processability and favorable low fuel consumption performance tend to be achieved.

Examples of the silica having a nitrogen adsorption specific surface area ($N_2SA$) of not less than 150 m$^2$/g include ULTRASIL VN3 ($N_2SA$: 175 m$^2$/g) manufactured by Evonik Degussa GmbH, ZEOSIL 1165MP ($N_2SA$: 160 m$^2$/g) manufactured by Rhodia Chimie, and ZEOSIL 1205MP ($N_2SA$: 200 m$^2$/g) manufactured by Rhodia Chimie.

The amount of the silica (1) per 100 parts by mass of the rubber component is preferably not less than 1 part by mass, more preferably not less than 5 parts by mass, further preferably not less than 10 parts by mass, and particularly preferably not less than 20 parts by mass. When the amount of the silica (1) is not less than 1 part by mass, the rolling resistance tends to be sufficiently reduced. In addition, the amount of the silica (1) is preferably not greater than 80 parts by mass, more preferably not greater than 60 parts by mass, and further preferably not greater than 30 parts by mass. When the amount of the silica (1) is not greater than 80 parts by mass, the rolling resistance tends to be sufficiently reduced.

The amount of the silica (2) per 100 parts by mass of the rubber component is preferably not less than 1 part by mass, more preferably not less than 5 parts by mass, further preferably not less than 10 parts by mass, particularly preferably not less than 20 parts by mass, and most preferably not less than 30 parts by mass. When the amount of the silica (2) is not less than 1 part by mass, sufficient steering stability tends to be achieved. In addition, the amount of the silica (2) is preferably not greater than 60 parts by mass and more preferably not greater than 50 parts by mass. When the amount of the silica (2) is not greater than 60 parts by mass, favorable processability tends to be achieved.

The amount of the silica (preferably, the total amount of the silica (1) and (2)) per 100 parts by mass of the rubber component is preferably not less than 10 parts by mass, more preferably not less than 30 parts by mass, and further preferably not less than 60 parts by mass. When the amount of the silica (preferably, the total amount of the silica (1) and (2)) is not less than 10 parts by mass, the advantageous effects of the present invention tend to be sufficiently achieved. In addition, the amount of the silica (preferably, the total amount of the silica (1) and (2)) is preferably not greater than 100 parts by mass, more preferably not greater than 90 parts by mass, and further preferably not greater than 80 parts by mass. When the amount of the silica (preferably, the total amount of the silica (1) and (2)) is not greater than 100 parts by mass, the silica is easily uniformly dispersed in the rubber composition, and thus favorable low fuel consumption performance and favorable wear resistance tend to be achieved.

In the case where the rubber composition according to the present invention contains the silica, the rubber composition preferably contains a silane coupling agent together with the silica. Accordingly, the advantageous effects of the present invention are more suitably achieved.

Examples of the silane coupling agent used in the present invention include, but are not particularly limited to: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3 -trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3 -triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used singly, or two or more of these silane coupling agents may be used in combination. Among these silane coupling agents, bis(3-triethoxysilylpropyl)disulfide is preferable, since the kneading processability is favorable.

The amount of the silane coupling agent per 100 parts by mass of the silica is preferably not less than 1 part by mass and more preferably not less than 3 parts by mass. When the amount of the silane coupling agent is not less than 1 part by mass, the effect achieved by blending the silane coupling agent tends to be sufficiently achieved. On the other hand, the amount of the silane coupling agent is preferably not greater than 20 parts by mass and more preferably not greater than 15 parts by mass. When the amount of the silane coupling agent is not greater than 20 parts by mass, an effect corresponding to the blending amount is sufficiently achieved, and favorable processability at the time of kneading tends to be achieved.

The rubber composition according to the present invention preferably contains carbon black. By containing the carbon black as a filler, the advantageous effects of the present invention are more suitably achieved. As the reason for this, in the sea-island structure in which the SBR A forms the sea phase and the SBR B forms the island phase, major part of the aluminum hydroxide is dispersed in the sea phase, and major part of the carbon black is also dispersed in the sea phase, so that the advantageous effects of the present invention are inferred to be more suitably achieved.

Examples of usable carbon black include, but are not particularly limited to, GPF, FEF, HAF, ISAF, and SAF. By blending the carbon black, the reinforcement performance can be enhanced, and aging due to ultraviolet rays can be prevented.

The nitrogen adsorption specific surface area ($N_2SA$) of the carbon black is preferably not less than 5 $m^2/g$, more preferably not less than 15 $m^2/g$, further preferably not less than 65 $m^2/g$, and particularly preferably not less than 95 $m^2/g$. When the nitrogen adsorption specific surface area of the carbon black is not less than 5 $m^2/g$, the reinforcement performance improves, and thus sufficient wear resistance tends to be achieved. In addition, the nitrogen adsorption specific surface area of the carbon black is preferably not greater than 200 $m^2/g$, more preferably not greater than 180 $m^2/g$, and further preferably not greater than 125 $m^2/g$. When the nitrogen adsorption specific surface area of the carbon black is not greater than 200 $m^2/g$, favorable dispersion of the carbon black is easily achieved, and thus favorable wear resistance and favorable low fuel consumption performance tend to be achieved.

The nitrogen adsorption specific surface area of the carbon black is obtained according to JIS K6217-2: 2001.

The dibutyl phthalate absorption amount (DBP) of the carbon black is preferably not less than 5 ml/100g, more preferably not less than 15 ml/100g, further preferably not less than 55 ml/100g, and particularly preferably not less than 80 ml/100g. When the DBP of the carbon black is not less than 5 ml/100g, the reinforcement performance improves and thus sufficient wear resistance tends to be achieved. In addition, the DBP of the carbon black is preferably not greater than 300 ml/100g, more preferably not greater than 200 ml/100g, and further preferably not greater than 120 ml/100g.

When the DBP of the carbon black is not greater than 300 ml/100g, favorable wear resistance tends to be achieved.

The DBP of the carbon black is obtained by the measurement method of JIS K6217-4: 2001.

The amount of the carbon black per 100 parts by mass of the rubber component is preferably not less than 1 part by mass and more preferably not less than 3 parts by mass. When the amount of the carbon black is not less than 1 part by mass, sufficient reinforcement performance can be achieved and thus favorable wear resistance tends to be achieved. In addition, the amount of the carbon black is preferably not greater than 30 parts by mass, more preferably not greater than 25 parts by mass, further preferably not greater than 20 parts by mass, and particularly preferably not greater than 15 parts by mass. When the amount of the carbon black is not greater than 30 parts by mass, favorable rolling resistance tends to be achieved.

For the reason that the advantageous effects of the present invention are more suitably achieved, the total amount of the aluminum hydroxide, the silica, and the carbon black per 100 parts by mass of the rubber component is preferably 15 to 150 parts by mass, more preferably 35 to 120 parts by mass, further preferably 50 to 100 parts by mass, and particularly preferably 70 to 90 parts by mass.

The rubber composition according to the present invention preferably contains a softener component. Accordingly, the advantageous effects of the present invention are more suitably achieved. As the reason for this, in the sea-island structure in which the SBR A forms the sea phase and the SBR B forms the island phase, major part of the aluminum hydroxide is dispersed in the sea phase, and major part of the softener component is also dispersed in the sea phase, so that the advantageous effects of the present invention are inferred to be more suitably achieved.

In particular, the rubber composition according to the present invention preferably contains the softener component in an amount of 10 to 30 parts by mass per 100 parts by mass of the rubber component, and contains, as the softener component, an aromatic resin in an amount of 1 to 10 parts by mass per 100 parts by mass of the rubber component. Accordingly, the advantageous effects of the present invention are further suitably achieved. The reason for this is inferred to be that major part of the aromatic resin is dispersed in the sea phase in the sea-island structure in which the SBR A forms the sea phase and the SBR B forms the island phase.

Examples of the softener component include oil and resins such as C5 petroleum resins, C9 petroleum resins, coumarone-indene resins, indene resins, and aromatic resins. Among these softener components, for the reason that the advantageous effects of the present invention are more suitably achieved, oil and aromatic resins are preferable, and aromatic resins are more preferable.

As the oil, for example, process oil, vegetable fats and oils, or a mixture thereof can be used. As the process oil, for example, paraffinic process oil or aromatic process oil, naphthenic process oil can be used. Specific examples of the paraffinic process oil include PW-32, PW-90, PW-150, and PS-32 manufactured by Idemitsu Kosan Co., Ltd. Specific examples of the aromatic process oil include AC-12, AC-460, AH-16, AH-24, and AH-58 manufactured by Idemitsu Kosan Co., Ltd. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used singly, or two or more of these oils may be used in combination. Among these oils, for the reason that the advantageous effects of the present invention are more suitably achieved, aromatic process oil is preferable.

The aromatic resin is not particularly limited as long as it is a resin containing an aromatic compound as a main component. For the reason that the advantageous effects of the present invention are more suitably achieved, an aromatic vinyl polymer obtained by polymerization of $\alpha$-methylstyrene and/or styrene is preferable.

For the aromatic vinyl polymer, styrene and/or $\alpha$-methylstyrene is used as an aromatic vinyl monomer (unit), and the aromatic vinyl polymer may be a homopolymer of either monomer or a copolymer of both monomers.

As the aromatic vinyl polymer, a homopolymer of $\alpha$-methylstyrene or a copolymer of $\alpha$-methylstyrene and styrene is preferable, since the polymer is economic, is easily processed, and has excellent wet grip performance.

The softening point of the aromatic resin (aromatic vinyl polymer) is preferably not higher than 100°C, more preferably not higher than 92°C, and further preferably not higher than 88°C. When softening point of the aromatic resin (aromatic vinyl polymer) is not higher than 100°C, favorable wear resistance and favorable wet grip performance tend to be achieved. In addition, the softening point is preferably not lower than 30°C, more preferably not lower than 60°C, and further preferably not lower than 75°C. When the softening point is not lower than 30°C, the wet grip performance tends to be able to be sufficiently improved.

In the present specification, the softening point is a softening point that is measured with a ring and ball softening point measuring device according to JIS K6220-1: 2001 and that is a temperature at which a ball has descended.

The weight-average molecular weight (Mw) of the aromatic resin (aromatic vinyl polymer) is preferably not less than 500 and more preferably not less than 800. When the weight-average molecular weight is not less than 500, the wet grip performance tends to be able to be sufficiently improved. In addition, the weight-average molecular weight is preferably not greater than 10,000, more preferably not greater than 3,000, and further preferably not greater than 2,000. When the weight-average molecular weight is not greater than 10,000, favorable low fuel consumption performance tends to be achieved.

The amount of the aromatic resin (aromatic vinyl polymer) per 100 parts by mass of the rubber component is preferably not less than 1 part by mass and more preferably not less than 3 parts by mass. When the amount of the aromatic resin (aromatic vinyl polymer) is not less than 1 part by mass, the advantageous effects of the present invention tend to be sufficiently achieved. In addition, the amount of the aromatic resin (aromatic vinyl polymer) is preferably not greater than 10 parts by mass and more preferably not greater than 7 parts by mass. When the amount of the aromatic resin (aromatic vinyl polymer) is not greater than 10 parts by mass, favorable low fuel consumption performance and favorable wear resistance tend to be achieved.

The amount of the softener component per 100 parts by mass of the rubber component is preferably not less than 10 parts by mass, more preferably not less than 15 parts by mass, and further preferably not less than 20 parts by mass. When the amount of the softener component is not less than 10 parts by mass, the advantageous effects of the present invention tend to be sufficiently achieved. In addition, the amount of the softener component is preferably not greater than 30 parts by mass and more preferably not greater than 27 parts by mass. When the amount of the softener component is not greater than 30 parts by mass, favorable low fuel consumption performance and favorable wear resistance tend to be achieved.

In the rubber composition according to the present invention, in addition to the above components, compounding ingredients that are used generally for production of a rubber composition, such as zinc oxide, stearic acid, various age resisters, an antioxidant, an antiozonant, wax, sulfur, and a vulcanization accelerator, can be blended as appropriate.

Examples of the vulcanization accelerator include N-tert-butyl-2-benzothiazolyl sulfenamide (TBBS), N-cyclohexyl-2-benzothiazolyl sulfenamide (CBS), N,N'-dicyclohexyl-2-benzothiazolyl sulfenamide (DZ), mercaptobenzothiazole (MBT), dibenzothiazolyl disulfide (MBTS), and N,N'-diphenyl guanidine (DPG). Among these vulcanization accelerators, for the reason that the vulcanization time (the vulcanization rate) is easily adjusted, TBBS is preferable, and TBBS and DPG are more preferably used in combination.

The rubber composition according to the present invention is produced by a general method. Specifically, the rubber composition according to the present invention can be produced, for example, by a method in which the respective components are kneaded with a Banbury mixer, a kneader, an open roll, or the like and then the mixture is vulcanized. The rubber composition can be used for each member of a tire, and can be suitably used for a tread among these members.

A pneumatic tire according to the present invention is produced by a general method using the above rubber composition.

Specifically, the rubber composition in which the above components are blended is extruded in an unvulcanized state so as to correspond to the shape of each tire member such as a tread, and is formed together with other tire members on a tire forming machine by a general method, thereby forming an unvulcanized tire. The unvulcanized tire is heated and pressurized in a vulcanizing machine, thereby obtaining a tire.

EXAMPLES

The present invention will be specifically described by means of examples, but the present invention is not limited to these examples.

Various chemicals used in examples and comparative examples are collectively described below.

SBR1: modified SBR (SBR prepared in Production Example 1 below, styrene content: 35% by mass, vinyl content: 50% by mass, Mw: 700 thousand).
SBR2: modified SBR (SBR prepared in Production Example 2 below, styrene content: 10% by mass, vinyl content: 40% by mass, Mw: 200 thousand).
SBR3: modified SBR (SBR prepared in Production Example 3 below, styrene content: 42% by mass, vinyl content: 40% by mass, Mw: 850 thousand).
SBR4: modified SBR (SBR prepared in Production Example 4 below, styrene content: 21% by mass, vinyl content: 55% by mass, Mw: 350 thousand).
SBR5: modified SBR (SBR prepared in Production Example 5 below, styrene content: 46% by mass, vinyl content: 35% by mass, Mw: 900 thousand).
SBR6: modified SBR (SBR prepared in Production Example 6 below, styrene content: 26% by mass, vinyl content: 63% by mass, Mw: 900 thousand).
BR: BR 150B (cis content: 97% by mass) manufactured by Ube Industries, Ltd.
Silica 1: ULTRASIL VN3 ($N_2$SA: 175 $m^2$/g) manufactured by Evonik Degussa GmbH.
Silica 2: ZEOSIL 115GR ($N_2$SA: 115 $m^2$/g) manufactured by Rhodia Chimie.
Silane coupling agent: Si266 (bis(3-triethoxysilylpropyl)disulfide) manufactured by Evonik Degussa GmbH.
Aluminum hydroxide: Higilite H-43 (average primary particle diameter: 1 $\mu$m) manufactured by Showa Denko K.K.
Carbon black: N220 ($N_2$SA: 114 $m^2$/g, DBP: 100 ml/100g) manufactured by Mitsubishi Chemical Corporation.
Plasticizer: NC300 (oil) manufactured by Japan Energy Corporation.

α-methylstyrene resin: SYLVARES SA85 (a copolymer of α-methylstyrene and styrene, softening point: 85°C, Mw: 1000) manufactured by Arizona Chemical Company.

Age resister 1: ANTIGENE 6C (N-phenyl-N'-(1,3-dimethylbutyl)-p-phenylenediamine) manufactured by Sumitomo Chemical Co., Ltd.

Age resister 2: ANTIGENE RD (poly (2,2,4-trimethyl-1,2-dihydroquinoline)) manufactured by Sumitomo Chemical Co., Ltd.

Stearic acid: stearic acid "Kiri" manufactured by NOF Corporation.

Zinc oxide: Ginrei R manufactured by Toho Zinc Co., Ltd.

Wax: SUNNOC WAX manufactured by Ouchi Shinko Chemical Industrial Co., Ltd.

Sulfur: HK-200-5 (5%-oil sulfur) manufactured by Hosoi Chemical Industry Co., Ltd.

Vulcanization accelerator 1 (NS): Nocceler NS (N-tert-butyl-2-benzothiazolylsulfenamide) manufactured by Ouchi Shinko Chemical Industrial Co., Ltd.

Vulcanization accelerator 2 (DPG): Nocceler D (N,N'-diphenylguanidine) manufactured by Ouchi Shinko Chemical Industrial Co., Ltd.

(Production Example 1)

Hexane, 1,3-butadiene, styrene, tetrahydrofuran, and ethylene glycol diethyl ether were put into an autoclave reactor purged with nitrogen. Next, bis(diethylamino)methylvinylsilane and n-butyllithium were put as a cyclohexane solution and an n-hexane solution, respectively, into the autoclave reactor to start polymerization.

At an agitation rate of 130 rpm and with the temperature in the reactor being set at 65°C, copolymerization of 1,3-butadiene and styrene was performed for 3 hours while the monomers were continuously fed into the reactor. Next, the obtained polymer solution was agitated at an agitation rate of 130 rpm, and N-(3-dimethylaminopropyl)acrylamide was added to the polymer solution, and reaction was performed for 15 minutes. After end of the polymerization reaction, 2,6-di-tert-butyl-p-cresol was added to the reaction solution. Next, the resultant solution was subjected to desolventization by steam stripping and dried by a heated roll adjusted to 110°C, to obtain a modified styrene butadiene rubber (SBR1).

(Production Example 2)

Cyclohexane, tetrahydrofuran, styrene, and 1,3-butadiene were put into an autoclave reactor purged with nitrogen. The temperature of the contents in the reactor was adjusted to 20°C. Then, n-butyllithium was added into the reactor to start polymerization. The polymerization was performed under a heat insulation condition, and the maximum temperature reached 85°C. At the time point at which the polymerization inversion rate reached 99%, butadiene was added to the polymer solution, and further polymerization was performed for 5 minutes. Then, 3-dimethylaminopropyltrimethoxysilane was added as a modifier to the reaction solution, and reaction was performed for 15 minutes. After end of the polymerization reaction, 2,6-di-tert-butyl-p-cresol was added to the reaction solution. Next, the resultant solution was subjected to desolventization by steam stripping and dried by a heated roll adjusted to 110°C, to obtain a modified styrene butadiene rubber (SBR2).

(Production Example 3)

Cyclohexane, tetrahydrofuran, styrene, and 1,3-butadiene were put into an autoclave reactor purged with nitrogen. The temperature of the contents in the reactor was adjusted to 20°C. Then, n-butyllithium was added into the reactor to start polymerization. The polymerization was performed under a heat insulation condition, and the maximum temperature reached 85°C. At the time point at which the polymerization inversion rate reached 99%, butadiene was added to the polymer solution, and further polymerization was performed for 5 minutes. Then, 3-diethylaminopropyltrimethoxysilane was added as a modifier to the reaction solution, and reaction was performed for 15 minutes. After end of the polymerization reaction, 2,6-di-tert-butyl-p-cresol was added to the reaction solution. Next, the resultant solution was subjected to desolventization by steam stripping and dried by a heated roll adjusted to 110°C, to obtain a modified styrene butadiene rubber (SBR3).

(Production Example 4)

Cyclohexane, tetrahydrofuran, styrene, and 1,3-butadiene were put into an autoclave reactor purged with nitrogen. The temperature of the contents in the reactor was adjusted to 20°C. Then, n-butyllithium was added into the reactor to start polymerization. The polymerization was performed under a heat insulation condition, and the maximum temperature reached 85°C. At the time point at which the polymerization inversion rate reached 99%, butadiene was added to the polymer solution, and further polymerization was performed for 5 minutes. Then, 3-diethylaminopropyltriethoxysilane was added as a modifier to the reaction solution, and reaction was performed for 15 minutes. After end of the polymerization reaction, 2,6-di-tert-butyl-p-cresol was added to the reaction solution. Next, the resultant solution was subjected to desolventization by steam stripping and dried by a heated roll adjusted to 110°C, to obtain a modified styrene butadiene rubber (SBR4).

(Production Example 5)

Cyclohexane, tetrahydrofuran, styrene, and 1,3-butadiene were put into an autoclave reactor purged with nitrogen. The temperature of the contents in the reactor was adjusted to 20°C. Then, n-butyllithium was added into the reactor to start polymerization. The polymerization was performed under a heat insulation condition, and the maximum temperature reached 85°C. At the time point at which the polymerization inversion rate reached 99%, butadiene was added to the polymer solution, and further polymerization was performed for 5 minutes. Then, methyltriethoxysilane was added as a modifier to the reaction solution, and reaction was performed for 15 minutes. After end of the polymerization reaction, 2,6-di-tert-butyl-p-cresol was added to the reaction solution. Next, the resultant solution was subjected to desolventization by steam stripping and dried by a heated roll adjusted to 110°C, to obtain a modified styrene butadiene rubber (SBR5).

(Production Example 6)

Cyclohexane, tetrahydrofuran, styrene, and 1,3-butadiene were put into an autoclave reactor purged with nitrogen. The temperature of the contents in the reactor was adjusted to 20°C. Then, n-butyllithium was added into the reactor to start polymerization. The polymerization was performed under a heat insulation condition, and the maximum temperature reached 85°C. At the time point at which the polymerization inversion rate reached 99%, butadiene was added to the polymer solution, and further polymerization was performed for 5 minutes. Then, methyltrimethoxysilane was added as a modifier to the reaction solution, and reaction was performed for 15 minutes. After end of the polymerization reaction, 2,6-di-tert-butyl-p-cresol was added to the reaction solution. Next, the resultant solution was subjected to desolventization by steam stripping and dried by a heated roll adjusted to 110°C, to obtain a modified styrene butadiene rubber (SBR6).

Examples and Comparative Examples

According to the blending contents indicated in Table 1, the materials other than sulfur and the vulcanization accelerator, among the blending materials, were kneaded with a 1.7-L Banbury mixer at 150°C for 5 minutes, to obtain a kneaded product. Next, sulfur and the vulcanization accelerator were added to the obtained kneaded product, and the mixture was kneaded with a twin-screw open roll at 80°C for 5 minutes to obtain an unvulcanized rubber composition. A rubber sheet was produced by using the obtained unvulcanized rubber composition, and was press-vulcanized at 150°C under 25 kgf for 35 minutes to obtain a vulcanized rubber composition.

The obtained unvulcanized rubber composition was formed into a tread shape and attached together with other tire members to form a tire, and the tire was vulcanized at 150°C for 35 minutes to produce a test tire (tire size: 175/65R15).

The following evaluations were made by using the obtained vulcanized rubber compositions and test tires. The test results are shown in Table 1.

(Low Fuel Consumption Performance)

A rolling resistance was measured by using a rolling resistance testing machine while each test tire was caused to run under conditions of a rim (15×6JJ), an internal pressure (230 kPa), a load (3.43 kN), and a speed (80 km/h). The measured rolling resistance is indicated as an index with the rolling resistance of Comparative Example 1 being 100. A higher index represents a lower rolling resistance and indicates that the low fuel consumption performance is better. An index not less than 98 was determined as favorable.

(Wet Grip Performance)

The wet grip performance was evaluated on the basis of the braking performance determined by an anti-lock brake system (ABS) evaluation test. Specifically, each test tire was mounted to a 1800-cc class passenger car equipped with an ABS, and the car was caused to run on an asphalt road surface (a wet road surface condition, skid number: approximately 50). Then, the brake was applied when the speed was 100 km/h, and the deceleration until the passenger car stopped was calculated. The deceleration in the present invention is a distance for which the passenger car runs until the passenger car stops. The measurement result for each composition is indicated as an index obtained by the following calculation equation with the wet grip performance index of Comparative Example 1 being 100. A higher wet grip performance index indicates that the braking performance is more favorable and wet grip performance is better. An index not less than 95 was determined as favorable.

$$\text{wet grip performance index} = (\text{deceleration of Comparative Example 1}) /$$

$$(\text{deceleration of each composition}) \times 100$$

(Wear Resistance)

Each test tire was mounted to a 1800-cc class passenger car equipped with an ABS, and the groove depth of the tread was measured after the car ran 8000 km on a predetermined course for a wear test. Then, the distance run when the groove depth decreased by 1 mm was calculated. The calculated distance is indicated as an index obtained by the following equation with the wear resistance index of Comparative Example 1 being 100. A higher value indicates that the wear resistance is better.

$$\text{wear resistance index} = (\text{running distance when groove depth of each composition}$$

$$\text{decreases by 1 mm}) / (\text{running distance when groove depth of Comparative Example 1 decreases}$$

$$\text{by 1 mm}) \times 100$$

(Temperature Dependency of Rolling Resistance (RR Temperature Dependency))

A rolling resistance was measured at each of conditions of outdoor air temperatures of 5°C and 20 °C by using a rolling resistance testing machine while each test tire was caused to run under conditions of a rim (15×6JJ), an internal pressure (230 kPa), a load (3.43 kN), and a speed (80 km/h). The difference between the rolling resistances under both conditions was calculated. The calculated difference is indicated as an index with the result of Comparative Example 1 being 100.
A higher index represents a smaller difference between the rolling resistances under both conditions and indicates that the temperature dependency of rolling resistance is lower.

[Table 1]

| | | Example | | | | Comparative Example | | | | | Example | | Comp. Ex. | |
|---|---|---|---|---|---|---|---|---|---|---|---|---|---|---|
| | | 1 | 2 | 3 | 4 | 1 | 2 | 3 | 4 | 5 | 5 | 6 | 6 | 7 |
| Blending amount (parts by mass) | SBR1 (SBR A) | 70 | 50 | 55 | 55 | 80 | 80 | 80 | 80 | 70 | - | - | - | - |
| | SBR2 (SBR B) | 20 | 30 | 30 | 30 | 10 | 10 | 10 | 10 | 20 | - | - | - | - |
| | SBR3 (SBR A) | - | - | - | - | - | - | - | - | - | 70 | 55 | - | - |
| | SBR4 (SBR B) | - | - | - | - | - | - | - | - | - | 20 | 30 | - | - |
| | SBR5 | - | - | - | - | - | - | - | - | - | - | - | 70 | 55 |
| | SBR6 | - | - | - | - | - | - | - | - | - | - | - | 20 | 30 |
| | BR | 10 | 20 | 15 | 15 | 10 | 10 | 10 | 10 | 10 | 10 | 15 | 10 | 15 |
| | Silica 1 (VN3) | 35 | 45 | 45 | 40 | 40 | 50 | 35 | 40 | 35 | 35 | 45 | 35 | 45 |
| | Silica 2 (115Gr) | 25 | 25 | 25 | 25 | 25 | 25 | 25 | 25 | 25 | 25 | 25 | 25 | 25 |
| | Silane coupling agent | 4.7 | 5.5 | 5.5 | 5.5 | 4.7 | 5.5 | 4.7 | 4.7 | 4.7 | 4.7 | 5.5 | 4.7 | 5.5 |
| | Aluminum hydroxide | 10 | 10 | 10 | 15 | - | - | 10 | - | - | 10 | 10 | 10 | 10 |
| | Carbon black | 5 | 5 | 5 | 5 | 5 | 5 | 5 | 5 | 5 | 5 | 5 | 5 | 5 |
| | Plasticizer | 20 | 20 | 20 | 20 | 20 | 20 | 20 | 25 | 20 | 20 | 20 | 20 | 20 |
| | $\alpha$-methylstyrene resin | 5 | 5 | 5 | 5 | 5 | 5 | 5 | 10 | 5 | 5 | 5 | 5 | 5 |
| | Age resister 1 | 2 | 2 | 2 | 2 | 2 | 2 | 2 | 2 | 2 | 2 | 2 | 2 | 2 |
| | Age resister 2 | 1 | 1 | 1 | 1 | 1 | 1 | 1 | 1 | 1 | 1 | 1 | 1 | 1 |
| | Stearic acid | 3 | 3 | 3 | 3 | 3 | 3 | 3 | 3 | 3 | 3 | 3 | 3 | 3 |
| | Zinc oxide | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 |
| | Sulfur (5%-oil sulfur) | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 (NS) | 2 | 2 | 2 | 2 | 2 | 2 | 2 | 2 | 2 | 2 | 2 | 2 | 2 |
| | Vulcanization accelerator 2 (DPG) | 2 | 2 | 2 | 2 | 2 | 2 | 2 | 2 | 2 | 2 | 2 | 2 | 2 |

(continued)

| | | Example | | | | Comparative Example | | | | | Example | | Comp. Ex. | |
|---|---|---|---|---|---|---|---|---|---|---|---|---|---|---|---|
| | | 1 | 2 | 3 | 4 | 1 | 2 | 3 | 4 | 5 | 5 | 6 | 6 | 7 |
| Tire performance | Low fuel consumption performance (rolling resistance index) | 110 | 100 | 100 | 98 | 100 | 95 | 100 | 97 | 110 | 115 | 103 | 116 | 104 |
| | Wet grip performance | 104 | 95 | 100 | 106 | 100 | 105 | 110 | 108 | 98 | 107 | 102 | 96 | 97 |
| | Wear resistance | 103 | 120 | 115 | 110 | 100 | 95 | 93 | 95 | 107 | 105 | 116 | 99 | 101 |
| | RR temperature dependency | 110 | 120 | 130 | 135 | 100 | 100 | 100 | 95 | 98 | 108 | 128 | 99 | 98 |

In each example containing 5 to 25 parts by mass of aluminum hydroxide per 100 parts by mass of the rubber component containing: not less than 50% by mass of the styrene butadiene rubber A having a styrene content of 30 to 45% by mass, a vinyl content of 40 to 55% by mass, and a weight-average molecular weight of 600 thousand to 850 thousand; and 15 to 45% by mass of the styrene butadiene rubber B having a styrene content of 5 to 25% by mass, a vinyl content of 30 to 55% by mass, and a weight-average molecular weight of 100 thousand to 350 thousand, the wear resistance was improved and the temperature dependency of the rolling resistance was reduced, while the low fuel consumption performance and the wet grip performance were kept favorable or improved.

By comparing Comparative Examples 1, 3, and 5 and Example 1, it was found that the wear resistance and the temperature dependency of rolling resistance can be synergistically improved by using a specific rubber component and aluminum hydroxide in combination.

Provided is a pneumatic tire that has improved wear resistance and has reduced temperature dependency of rolling resistance while low fuel consumption performance and wet grip performance are kept favorable or improved.

The pneumatic tire has a tread produced by using a rubber composition containing 5 to 25 parts by mass of aluminum hydroxide per 100 parts by mass of a rubber component containing: not less than 50% by mass of a styrene butadiene rubber A having a styrene content of 30 to 45% by mass, a vinyl content of 40 to 55% by mass, and a weight-average molecular weight of 600 thousand to 850 thousand; and 15 to 45% by mass of a styrene butadiene rubber B having a styrene content of 5 to 25% by mass, a vinyl content of 30 to 55% by mass, and a weight-average molecular weight of 100 thousand to 350 thousand.

**Claims**

1. A pneumatic tire having a tread produced by using a rubber composition containing 5 to 25 parts by mass of aluminum hydroxide per 100 parts by mass of a rubber component containing: not less than 50% by mass of a styrene butadiene rubber A having a styrene content of 30 to 45% by mass, a vinyl content of 40 to 55% by mass, and a weight-average molecular weight of 600 thousand to 850 thousand; and 15 to 45% by mass of a styrene butadiene rubber B having a styrene content of 5 to 25% by mass, a vinyl content of 30 to 55% by mass, and a weight-average molecular weight of 100 thousand to 350 thousand.

2. The pneumatic tire according to claim 1, wherein the rubber composition contains 1 to 10 parts by mass of an aromatic resin and 10 to 30 parts by mass of a softener component per 100 parts by mass of the rubber component.

3. The pneumatic tire according to claim 1 or 2, wherein the rubber composition contains not less than 60 parts by mass of silica per 100 parts by mass of the rubber component.

4. The pneumatic tire according to any one of claims 1 to 3, wherein the rubber composition contains 1 to 30 parts by mass of carbon black per 100 parts by mass of the rubber component.

5. The pneumatic tire according to any one of claims 1 to 4, wherein the rubber composition contains butadiene rubber.

**Patentansprüche**

1. Luftreifen mit einer Lauffläche, die hergestellt ist unter Verwendung einer Kautschukzusammensetzung, die 5 bis 25 Massenteile Aluminiumhydroxid pro 100 Massenteile einer Kautschukkomponente enthält, die enthält: nicht weniger als 50 Massen-% eines Styrol-Butadien-Kautschuks A mit einem Styrolgehalt von 30 bis 45 Massen-%, einem Vinylgehalt von 40 bis 55 Massen-% und einem gewichtsgemittelten Molekulargewicht von 600000 bis 850000; und 15 bis 45 Massen-% eines Styrol-Butadien-Kautschuks B mit einem Styrolgehalt von 5 bis 25 Massen-%, einem Vinylgehalt von 30 bis 55 Massen-% und einem gewichtsgemittelten Molekulargewicht von 100000 bis 350000.

2. Luftreifen nach Anspruch 1, wobei die Kautschukzusammensetzung 1 bis 10 Massenteile eines aromatischen Harzes und 10 bis 30 Massenteile einer Weichmacherkomponente pro 100 Massenteile der Kautschukkomponente enthält.

3. Luftreifen nach Anspruch 1 oder 2, wobei die Kautschukzusammensetzung nicht weniger als 60 Massenteile Siliciumdioxid pro 100 Massenteile der Kautschukkomponente enthält.

4. Luftreifen nach einem der Ansprüche 1 bis 3, wobei die Kautschukzusammensetzung 1 bis 30 Massenteile Carbon Black pro 100 Massenteile der Kautschukkomponente enthält.

5. Luftreifen nach einem der Ansprüche 1 bis 4, wobei die Kautschukzusammensetzung Butadienkautschuk enthält.

**Revendications**

1. Pneu ayant une bande de roulement produite par utilisation d'une composition de caoutchouc contenant 5 à 25 parties en masse d'hydroxyde d'aluminium pour 100 parties en masse d'un composant caoutchouc contenant : au moins 50 % en masse d'un caoutchouc de styrène-butadiène A ayant une teneur en styrène de 30 à 45 % en masse, une teneur en vinyle de 40 à 55 % en masse, et une masse moléculaire moyenne en masse de 600 000 à 850 000 ; et 15 à 45 % en masse d'un caoutchouc de styrène-butadiène B ayant une teneur en styrène de 5 à 25 % en masse, une teneur en vinyle de 30 à 55 % en masse, et une masse moléculaire moyenne en masse de 100 000 à 350 000.

2. Pneu selon la revendication 1, dans lequel la composition de caoutchouc contient 1 à 10 parties en masse d'une résine aromatique et 10 à 30 parties en masse d'un composant plastifiant pour 100 parties en masse du composant caoutchouc.

3. Pneu selon la revendication 1 ou 2, dans lequel la composition de caoutchouc contient au moins 60 parties en masse de silice pour 100 parties en masse du composant caoutchouc.

4. Pneu selon l'une quelconque des revendications 1 à 3, dans lequel la composition de caoutchouc contient 1 à 30 parties en masse de noir de carbone pour 100 parties en masse du composant caoutchouc.

5. Pneu selon l'une quelconque des revendications 1 à 4, dans lequel la composition de caoutchouc contient un caoutchouc de butadiène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003012863 A